# EUROPÄISCHE PATENTSCHRIFT

(11) **EP 3 150 565 B1**
(45) Veröffentlichungstag und Bekanntmachung des Hinweises auf die Patenterteilung: **14.11.2018**
(21) Anmeldenummer: 16188996.9
(22) Anmeldetag: 15.09.2016
(51) Int. Cl.: C04B 28/06, C04B 40/06, A01K 63/00, E04H 4/00, C04B 111/10, C04B 111/00

(54) **VERWENDUNG VON MÖRTEL AUS TONERDEZEMENT UND SAND**
USE OF MORTAR BASED ON ALUMINACEMENT AND SAND
UTILISATION DE MORTIER CONSTITUE DE CIMENT FONDU ET DE SABLE

(30) Priorität: 01.10.2015 AT 508282015
(43) Veröffentlichungstag der Anmeldung: 05.04.2017
(73) Patentinhaber: Wesner, Wolfgang, 1220 Wien (AT); Kurzmann, Heimo, 5302 Henndorf (AT)
(72) Erfinder: Wesner, Wolfgang, 1220 Wien (AT); Kurzmann, Heimo, 5302 Henndorf (AT)
(74) Vertreter: Vinazzer, Edith

(56) Entgegenhaltungen:
- EP-A1- 2 826 761
- WO-A1-01/98606
- AT-B- 408 983
- AU-A4- 2010 100 170
- CN-A- 101 362 641
- DE-B3-102009 014 886
- JP-A- 2007 261 903
- JP-B2- 3 969 832
- KR-B1- 100 421 202
- US-A1- 2003 077 389
- US-A1- 2009 119 900

## Beschreibung

Die Erfindung betrifft die Verwendung von Mörtel, der aus Zement, Wasser und Sand besteht, zur Ausgestaltung des von Wasser kontaktierten Innenbereiches von biologisch aufbereitbaren Gewässern, insbesondere von Schwimmteichen, Naturpools oder Fischbecken.

Aus der DE 10 2009 014 886 B3 sind ein Verfahren zur Beschichtung von Betoninnenoberflächen von Wasserbehältern oder Wasserleitungen mit einem Spritzmörtel und die Verwendung einer Spritzmörtelzusammensetzung bekannt. Die Spritzmörtelzusammenfassung enthält zumindest 50 Gewichtsprozent einer Gesteinskörnungsmischung aus Sand bestehend aus unterschiedlichen Kornfraktionen mit vorwiegenden Korngrößen bis 2 mm, zumindest 10 Gew% eines Kalziumaluminat Zementes als Bindemittel und mindestens 0,5 Gewichtsprozent anorganische Zusatzstoffe mit latent hydrolischen, puzzolanischen oder inerten Eigenschaften, ausgewählt aus der Gruppe bestehend aus Silicastaub, Quarzstaub, Titandioxidpulver, Flugasche und/oder Kalksteinmehl. Aus der JP 2007 261903 A ist ein Mörtel zur Reparatur des von Wasser kontaktierten Innenbereiches von Fischbecken bekannt, wobei der Mörtel gemischt wird aus 100 Gewichtsteilen Portlandzement, 200 bis 500 Gewichtsteilen Silicasand, 1,5 bis 2,5 Gewichtsteilen Quarzpigment, 15 bis 20 Gewichtsteilen Zusätze und 70 bis 90 Gewichtsteilen Wasser.

Bei der Ausgestaltung des Innenbereiches, also jener Innenflächen in Schwimmteichen, Naturpools und Fischbecken, die mit dem Wasser in Kontakt kommen, hat sich die Verwendung klassischer Mörtel als ungeeignet erwiesen. Beim Aushärtevorgang von handelsüblichem Kalkzement wird Kalziumhydroxid freigesetzt, wodurch der pH-Wert des Gewässers über mehrere Monate stark erhöht wird, so dass eine Nutzung des Gewässers zum Baden oder für Fische innerhalb dieses Zeitraumes nicht möglich ist. Bei erhöhtem pH-Wert wird außerdem jenes Enzym, welches die Entgiftung von Nitrit durch Oxidation zum Nitrat bewirkt, gehemmt, wodurch es zu einem stetigen Aufbau von Nitrit im Wasser kommt. Dadurch wird auch die natürliche Selbstreinigung des Gewässers blockiert, es kommt zu einer Massenentwicklung von Schwebealgen und gegen Nitrit weniger resistenter Arten. So zeigen insbesondere einige Toxin-bildende Blaualgenarten eine erhöhte Resistenz gegen Nitrit. Darüber hinaus enthalten handelsübliche Zemente oft höhere Anteile an Sulfaten, welche, wenn sie im Wasser gelöst werden, zu einer stark verringerten Leistungsfähigkeit der biologischen Aufbereitung führen. Die Aufgabe eines biologischen Filters ist es, durch Biofilmaufbau auf einem Filtersubstrat im Wasser gelöste Verunreinigungen zu binden. Sulfate werden in tieferen Schichten der Biofilme zu giftigen Schwefelwasserstoffen veratmet ("Sulfatatmung"), was zur Zerstörung und Ablösung des Biofilms in den biologischen Filtern führt. Darüber hinaus sind in vielen Zementsorten erhöhte Phosphatwerte zu finden. Ziel der biologischen Aufbereitung von Schwimmteichen und Naturpools ist es aber, Algen und Belagbildung durch eine Limitierung der Phosphatverfügbarkeit zu begrenzen. Ein Einbringen von größeren Mengen an Phosphaten über das Baumaterial ist somit kontraproduktiv. In der ÖNORM L1136 ist daher die Verwendung von Baumaterial mit einem extrahierbaren Gesamtphosphatgehalt < 6 mg/kg zum Einbau in Schwimmteichen und Naturpools vorgesehen.

Auf Mörtel und Beton, welche in biologisch aufbereiteten Gewässern verbaut werden, wirkt ferner eine erhöhte Korrosion. Durch biogene Entkalkung wird dem Wasser ständig Kalk entzogen, durch Atmung von Mikroorganismen, etwa im Biofilm, ist immer eine erhöhte Kohlendioxidkonzentration im Wasser vorhanden, welche zur Auflösung von kalkhaltigen Materialien führt. Speziell Betonflächen, auf denen Biofilm wächst, sind mit hohen Kohlendioxidkonzentrationen konfrontiert, so dass s der Biofilm CO₂ auch in den Beton abgibt. Das führt einerseits zur Senkung des pH-Wertes im Beton und andererseits zur Bildung von wasserlöslichem Kalziumhydrogencarbonat, welches in weiterer Folge ausgewaschen wird. In klassischem Beton bzw. Mörtel ist Ettringit, ein Kalzium-Aluminiumsulfat, ein wichtiger, festigkeitsbildender und die Aushärtung verzögernder Bestandteil. Ettringit wird allerdings nur oberhalb eines pH-Wertes von 12 gebildet und zersetzt sich, wenn der pH-Wert unter 9 absinkt. Sulfatische Bestandteile im Beton bzw. Mörtel werden durch Sulfatatmung reduziert, der dabei entstehende Schwefelwasserstoff reagiert mit Eisen im Beton zu schwarzem Eisensulfit, wodurch unschöne Verfärbungen der im Gewässer befindlichen Mörtel- und Betonflächen auftreten können. Ist der Sauerstoff im Mörtel verbraucht, so werden Eisenoxide zu zweiwertigen Eisenverbindungen reduziert und gehen in Lösung. Wenn die gelösten Eisenverbindungen an der ausgehärteten Mörteloberfläche angekommen sind, werden sie durch den Sauerstoff im Wasser wieder oxidiert und lagern sich auf der Mörteloberfläche als braune Eisenoxide ab. Diese Verfärbungen sind unerwünscht.

Ein weiteres Problem bei der Verwendung von klassischen, handelsüblichen Zementen ist deren Schwermetallgehalt. Insbesondere Mörtel, welchen zur pH-Wert-Absenkung Schlacke oder Flugasche zugesetzt wurde, weisen oft Schwermetallkonzentrationen auf, welche bei unter Wasser verbautem Mörtel sukzessive in Lösung gehen und so die biologische Aufbereitung beeinträchtigen. Um das Auftreten von Betonkrätze als Folge des Chrom VI-Gehaltes von Zement zu verhindern, wird dem Zement Eisen II zugesetzt, welches Chrom VI zu weniger giftigem Chrom III reduziert. Leider reduziert das zugesetzte Eisen II auch Nitrat, und zwar aus dem Wasser, mit dem der Mörtel angerührt wird, wobei Nitrit entsteht, welches in der Folge nicht abgebaut werden kann und so das Gewässer vergiftet.

Beton bzw. Mörtel wird durch das Fehlen von Poren wasserundurchlässig. Dies kann insbesondere durch die spezielle Zusammensetzung der anorganischen Rohstoffe erreicht werden oder auch durch einen hohen Kunststoffanteil. Das kann bis zum völligen Ersatz des anorganischen Bindemittels zugunsten von Bindemitteln auf Basis von Epoxid, Acrylat oder Polyurethan gehen. Ein entsprechendes Beispiel dafür ist beispielsweise in der EP 2 826 761 A1 offenbart. Solche Mörtel sich durchaus für den Einsatz in biologisch aufzubereitenden Gewässern geeignet, ihr Nachteil ist jedoch ihr hoher Preis und die oft sehr unterschiedliche Verarbeitung.

Mörtel aus sulfataktivierten Zementen unter Verwendung von Hüttensand oder Schlacke ist aus der AT 408 983 B, unter Verwendung von Flugasche aus der AT 508 506 A, jeweils als Alternative zu herkömmlichen Zementen, bekannt. Bei sulfataktivierten Zementen ist ein Teil des Kalziumoxides durch Gips ersetzt. Dadurch werden beim Aushärten nicht so viele Basen freigesetzt und es entsteht weniger Wärme bei der Aushärtung. Da einerseits Sulfate nicht mit der ökologischen Wasseraufbereitung harmonieren und andererseits entsprechend der Herkunft der Rohmaterialien (Schlacke, Hüttensand, Flugasche) zahlreiche Verunreinigungen des Materials mit Schwermetallen, Phosphaten usw. kaum vermeidbar sind, sind solche Mörtel für den Einsatz in Naturpools, Schwimmteichen und Fischbecken nicht geeignet.

Geopolymere bestehen aus gebrannter Tonerde, welche mit Alkalien, wie Natronlauge oder Wasserglas, einem Polymerisationsprozess zugeführt werden. Diese Technik wird in zahlreichen Patenten behandelt, beispielsweise in der FR 2 666 253 A. Geopolymerisation ist durch die Freisetzung hoher Reaktionswärmen gekennzeichnet, außerdem ist die Freisetzung von Natriumionen aus dem Endprodukt für die Anwendung in biologisch aufzubereitenden Gewässern problematisch. Ein weiteres Problem beim Einsatz von Geopolymeren ergibt sich durch das Handling beim Einsatz im Garten- und Landschaftsbau aufgrund der hohen Alkalität des Mörtels.

Mischformen von klassischen Zementen und Geopolymeren sowie Puzzolanen sind beispielsweise in der DE 696 07 381 T2 beschrieben und werden als besonders dichte, besonders haltbare und chemisch resistente Mörtel bezeichnet, welche vor allem bei der Endlagerung von schädlichen Abfällen genutzt werden. Auch diese Zusammensetzungen sind für den Einsatz in biologisch aufbereiteten Gewässern aufgrund des Alkalien-, Schwefel- und Eisengehaltes nicht geeignet. Der Zusatz von Trass zu Zement, insbesondere Portland-Komposit-Zement, ist eine klassische Variante, um Ausscheidungen von Kalziumoxid beim Aushärten von Zement zu verringern. Puzzolan, ein Silicium-Aluminiummineral, ist in der Lage, freigesetztes Kalziumhydroxid zu binden und so Ausblühungen zu verringern. Die Alkalität der Mörtel wird dadurch kaum herabgesetzt, die Mörtel werden jedoch durch Puzzolan dichter. Der Einsatz von Trasszement für Mörtelanwendungen unter Wasser ist bekannt.

Der Erfindung liegt die Aufgabe zu Grunde, einen kostengünstigen und für den Einsatz in biologisch aufzubereitenden Gewässern besonders geeigneten Mörtel auf mineralischer Basis zur Verfügung zu stellen. Dieser Mörtel soll die erwähnten Nachteile der klassischen Mörtel nicht aufweisen, wobei keine synthetischen Kunststoffverbindungen eingesetzt werden sollen. Die Verarbeitungszeit und Verarbeitungstechnik soll ferner auf die manuelle Verarbeitung abgestimmt sein, es soll keine erhöhte Gefährdung der Bauarbeiter bei der Verarbeitung des Produktes gegeben sein und es soll kein besonders Know-how zur Verarbeitung erforderlich sein.

Gelöst wird die gestellte Aufgabe erfindungsgemäß durch die Verwendung von Mörtel, der aus Zement, Wasser und Sand besteht, zur Ausgestaltung des von Wasser kontaktierten Innenbereiches von biologisch aufbereitbaren Gewässern, insbesondere von Schwimmteichen, Naturpools oder Fischbecken, dadurch gekennzeichnet, dass im Mörtel als Zement reiner Kalziumaluminat-Zement und als Sand Dolomitsand und/oder Quarzsand verwendet wird, wobei der Kalziumaluminat-Zement jeweils höchstens 2 Gew.% an Sulfaten, Phosphaten und Silikaten enthält und sein Anteil im Trockenmörtel 5 Gew.% bis 30 Gew.% beträgt.

Mörtel mit Kalziumaluminat-Zement als Bindemittel weist eine sehr schnelle Festigkeitsentwicklung auf und besitzt eine hohe Beständigkeit gegenüber Säuren bis zu einem pH-Wert von etwa 4. Die schnelle Festigkeitsentwicklung ist besonders vorteilhaft, etwa bei der Verwendung als Mauermörtel zur Verlegung von Natursteinen, zum Auskleiden eines Schwimmteiches oder Schwimmbeckens. Die hohe Beständigkeit gegenüber Säureangriff verhindert die Auflösung des Bindemittels durch Kohlendioxid, welches bei Biofilmanwuchs in den verfestigten Mörtel abgegeben wird. Insbesondere in Kombination mit Dolomitsand, der Kohlendioxid abfängt und neutralisiert, zeigt der Einsatz von Mörtel gemäß der Erfindung eine erstklassige Beständigkeit in biologisch aufbereiteten Gewässern.

Neben dem Bindemittel ist daher der Sand, welcher den Hauptbestandteil des Mörtels bildet, von besonderer Bedeutung für die Erfindung. Grundsätzlich ist es möglich, einen für die inneren Flächen von Schwimmteichen, Naturpools und dergleichen geeigneten Mörtel aus Kalziumaluminat-Zement mit sauberem, gewaschenem Quarzsand herzustellen. Die bevorzugte Zusammensetzung des Mörtels für biologisch aufzubereitende Gewässer enthält jedoch kalkhaltigen Dolomitsand. Ein hoher Kalkanteil im Sand schützt das Bindemittel vor Korrosion und erhöht so die Lebensdauer der Bauwerke unter Wasser. Vom Biofilm auf dem verfestigten Mörtel gebildetes Kohlendioxid, welches in besonders hoher Konzentration unter dem auf der Oberfläche aufwachsenden Biofilm gebildet wird, reagiert so großteils mit dem Kalkanteil im Sand zu Kalziumhydrogencarbonat und löst daher gleichmäßig die ganze Oberfläche an. Quarzsand ist mit dem Nachteil verbunden, dass das Kohlendioxid allein auf das Kalzium des Bindemittels wirkt und dieses selektiv herauslöst. Dadurch kann es zu einem bröseligen Zerfall der Mörteloberfläche kommen und es können größere Poren und Klüfte entstehen, in denen sich erneut Biofilm bildet, welcher eher schwer zu entfernen ist. In weiterer Folge kann sich der nicht mehr gebundene Quarzsand ablösen. Wird jedoch kalkhaltiger Sand, also Dolomitsand, eingesetzt, so erfolgt eine gleichmäßige Verwitterung der gesamten Oberfläche, die Oberfläche bleibt dabei relativ glatt. Die Geschwindigkeit der Verwitterung der kalkreichen Oberfläche beträgt ca. ein Zehntel von jener bei der ausschließlichen Verwendung von Quarzsand. Dies ist darauf zurückzuführen, dass das entstehende Kohlendioxid sich auf eine viel größere Oberfläche verteilen kann und die schnellere Umsetzung hoher Konzentrationen, welche zur Ausbildung von tiefen Poren führen können, verhindert. Dolomitsand weist zudem einen zusätzlichen Magnesiumanteil auf, welcher die gleichmäßige Verwitterung der Oberfläche weiter begünstigt, so dass besonders lange eine formstabile und pflegeleichte Oberfläche erhalten bleibt. Dolomitsand und Quarzsand können ferner in jedem Verhältnis zueinander eingesetzt werden. Diese Misch-Varianten können bei bestimmten Anforderungen an die Festigkeit des Mörtels von Relevanz sein.

Es können vorteilhafterweise handelsübliche Kalziumaluminat-Zemente und handelsüblicher Dolomitsand und/oder Quarzsand verwendet werden. Der verwendete Dolomitsand besteht zu mindestens 90 % aus dem Mineral Dolomit, der Quarzsand sollte bevorzugt ein reiner Quarzsand sein, welcher nahezu ausschließlich aus Quarzkörnern besteht.

Bei der Erfindung kommen ferner Mörtel zum Einsatz, deren Sand einen extrahierbaren Phosphatgehalt < 6 mg/kg aufweist. Eine Auflösung der oberflächlichen Schichten des Mörtels ist vorgesehen und Teil des erfindungsgemäßen Konzeptes. Daher dürfen im Ausgangsmaterial keine Substanzen enthalten sein, welche sich auf die Wasserqualität nachträglich auswirken könnten. Eine Lösung von Phosphaten aus dem Baumaterial würde zu einer erhöhten Belagbildung am Material, zur Bildung von Fadenalgenaufwuchs und/oder zu einer Eutrophierung des Wassers führen, was eine Wassertrübung zur Folge hat.

Die Mischung aus Sand und Kalziumaluminat-Zement kann bereits gebrauchsfertig geliefert bzw. zur Verfügung gestellt werden, so dass sie auf der Baustelle lediglich mit Wasser angerührt werden muss. Es können jedoch auch Sets mit den beiden Einzelkomponenten in getrennten Gebinden zur Verfügung gestellt werden, um unterschiedliche Mischverhältnisse zu ermöglichen.

Für eine Verwendung des Mörtels zur Herstellung einer Estrich-Fläche, zum Ausgießen von Schalungen oder Formen oder zur Errichtung von Bodenplatten sollte die Korngröße des Sandes bis zu 4 mm betragen. Wird der Mörtel zur Befestigung von Steinen, wie Kugelsteinen, Natursteinen oder Mauersteinen, oder zur Befestigung von Ziegeln eingesetzt, beträgt die bevorzugte Korngröße des Sandes bis zu 2 mm. Bei einer Verwendung des Mörtels als Fugen- oder Gussmasse sollte die Korngröße des Sandes bis zu 1 mm betragen. Aus dem Mörtel können für den Einsatzzweck in biologisch aufbereitbaren Gewässern Fertigteile erstellt werden, beispielsweise Platten zur Boden- und Wandauskleidung, ferner Formsteine für Pool- oder Teichränder oder Fertigteile für Treppen. Der Vorteil, dass die Verwendung des Mörtels beim Aushärten keine bzw. keine nennenswerte Erhöhung des pH-Wertes des Gewässers zeigt, ist ein gewisser Nachteil beim Einsatz von Eisenbewehrungen, welche zur Festigkeitserhöhung gegebenenfalls in den Mörtel eingegossen werden. Das Material für solche Bewehrungen sollte daher vorteilhafterweise so gewählt werden, dass auch bei pH-Werten im Bereich um den neutralen pH keine nennenswerte Korrosion auftritt.

## Patentansprüche

1. Verwendung von Mörtel, der aus Zement, Wasser und Sand besteht, zur Ausgestaltung des von Wasser kontaktierten Innenbereiches von biologisch aufbereitbaren Gewässern, insbesondere von Schwimmteichen, Naturpools oder Fischbecken, **dadurch gekennzeichnet,**
**dass** im Mörtel als Zement reiner Kalziumaluminat-Zement und als Sand Dolomitsand und/oder Quarzsand verwendet wird, wobei der Kalziumaluminat-Zement jeweils höchstens 2 Gew.% an Sulfaten, Phosphaten und Silikaten enthält und sein Anteil im Trockenmörtel 5 Gew.% bis 30 Gew.% beträgt.

2. Verwendung von Mörtel nach Anspruch 1, **dadurch gekennzeichnet, dass** der Sand einen extrahierbaren Phosphatgehalt < 6 mg/kg aufweist.

3. Verwendung von Mörtel nach Anspruch 1 oder 2 als Estrich zum Ausgießen von Schalungen oder Formen oder zur Errichtung von Bodenplatten im von Wasser kontaktierten Innenbereich von biologisch aufbereitbaren Gewässern, wobei die Korngröße des Sandes bis zu 4 mm beträgt.

4. Verwendung von Mörtel nach Anspruch 1 oder 2 zur Befestigung von Steinen, beispielsweise von Kugelsteinen, Natursteinen oder Mauersteinen, oder zur Befestigung von Ziegeln im von Wasser kontaktierten Innenbereich von biologisch aufbereitbaren Gewässern, wobei die Korngröße des Sandes bis zu 2 mm beträgt.

5. Verwendung von Mörtel nach Anspruch 1 oder 2 als Fugen- oder Gussmasse im von Wasser kontaktierten Innenbereich von biologisch aufbereitbaren Gewässern, wobei die Korngröße des Sandes bis zu 1 mm beträgt.

6. Verwendung von Mörtel nach Anspruch 1 oder 2 zur Herstellung von Fertigteilen, wie Platten zur Boden- und Wandauskleidung sowie Formsteinen für Pool- und Teichränder, und von Fertigteilen für Treppen im von Wasser kontaktierten Innenbereich von biologisch aufbereitbaren Gewässern.

## Claims

1. Use of mortar consisting of cement, water and sand, for designing the interior of biologically preparable bodies of water to be contacted by water, in particular of swimming ponds, natural pools or fish ponds, **characterised in that** pure calcium aluminate cement is used as cement in the mortar, and dolomite sand and/or quartz sand is used as sand, wherein the calcium aluminate cement contains maximum each of 2 wt. % sulphates, phosphates and silicates and its proportion of dry mortar is 5 wt. % to 30 wt. %.

2. Use of mortar according to claim 1, **characterised in that** the sand has an extractable phosphate content of < 6 mg/kg.

3. Use of mortar according to claim 1 or 2 as screed for pouring out formwork or moulds or for installing floor tiles in an interior of biologically preparable bodies of water contacted by water, wherein the grain size of the sand is up to 4 mm.

4. Use of mortar according to claim 1 or 2 for fitting stones, for example round stones, natural stones or bricks, or for fitting tiles in an interior of biologically preparable bodies of water contacted by water, wherein the grain size of the sand is up to 2 mm.

5. Use of mortar according to claim 1 or 2 as jointing or moulding material in an interior of biologically preparable bodies of water contacted by water, wherein the grain size of the sand is up to 1 mm.

6. Use of mortar according to claim 1 or 2 for producing pre-fabricated components such as tiles for floor or wall linings as well as moulded blocks for pool and pond edges, and of pre-fabricated components for stairs in an interior of biologically preparable bodies of water contacted by water.

## Revendications

1. Utilisation de mortier composé de ciment, d'eau et de sable, destiné à l'aménagement de l'intérieur en contact avec de l'eau d'étendues d'eau retraitables biologiquement, notamment des étangs de baignade, des piscines naturelles ou des bassins à poissons, **caractérisée en ce que** le mortier est utilisé comme ciment d'aluminate de calcium pur et comme sable dolomitique et/ou sable quartzeux, le ciment d'aluminate de calcium contenant respectivement au maximum 2 % en poids de sulfates, phosphates et silicates et sa part correspondant de 5 % à 30 % du poids dans le mortier sec.

2. Utilisation de mortier selon la revendication 1, **caractérisée en ce que** le sable présente une teneur en phosphate extractible < 6 mg/kg.

3. Utilisation de mortier selon la revendication 1 ou 2 comme chape à couler des coffrages ou formes ou pour la construction de plaques de base dans des intérieurs en contact avec de l'eau d'étendues d'eau retraitables biologiquement, la grosseur de grain de sable étant de 4 mm maximum.

4. Utilisation de mortier selon la revendication 1 ou 2 pour la fixation de pierres, par exemple de galets, de pierres naturelles ou de briques ou pour la fixation de tuiles dans l'intérieur en contact avec de l'eau d'étendues d'eau retraitables biologiquement, la grosseur de grain de sable étant de 2 mm maximum.

5. Utilisation de mortier selon la revendication 1 ou 2 comme masse coulée et de remplissage de joints dans des intérieurs en contact avec de l'eau d'étendues d'eau retraitables biologiquement, la grosseur de grain de sable étant de 1 mm maximum.

6. Utilisation de mortier selon la revendication 1 ou 2 pour la fabrication de pièces finies telles que des dalles pour le revêtement du sol et des murs ainsi que des briques moulées pour les bords de piscine et d'étang dans des intérieurs en contact avec de l'eau d'étendues d'eau retraitables biologiquement.
